# EUROPEAN PATENT SPECIFICATION

(11) **EP 3 599 551 B1**
(45) Date of publication and mention of the grant of the patent: **11.11.2026**
(21) Application number: 19188311.5
(22) Date of filing: 25.07.2019
(51) Int. Cl.: G06F 8/61, G06F 9/445, G06F 8/36

(54) **MAINTENANCE, DISTRIBUTION AND LOADING OF SPECIFIC FUNCTIONALITY OF A SOFTWARE APPLICATION ON A CLIENT DEVICE**
WARTUNG, VERTEILUNG UND LADEN VON SPEZIFISCHEN FUNKTIONALITAETEN EINER SOFTWARE-ANWENDUNG AUF EIN BENUTZERGERAET
MAINTENANCE, DISTRIBUTION ET CHARGEMENT DE FONCTIONNALITES DEDIEES D'UNE APPLICATION LOGICIELLE SUR UN DISPOSITIF CLIENT

(30) Priority: 27.07.2018 GB 201812287
(43) Date of publication of application: 29.01.2020
(73) Proprietor: DAZN Limited, Feltham TW13 7BZ (GB)
(72) Inventor: MEZZALIRA, Luca, London, W6 7AP (GB)
(74) Representative: Kilburn & Strode LLP

(56) References cited:
- GB-A- 2 311 388
- GB-A- 2 311 390
- US-B1- 9 170 784

## Description

The present disclosure relates to the maintenance, distribution and loading of software applications, in particular although not exclusively web applications

### BACKGROUND

Software applications may be used in contexts where a software application is provided by a primary service provider on behalf of a number of secondary service providers. An example is an over the top (OTT) video streaming service, such as a sports content service provided by a sports content provider. The primary provider may provide content such as sports on behalf of secondary service providers, for example television, telephone and/or broadband service providers. In this and other situations it is often desirable for the software to behave in a specific way for each secondary service provider, to behave in a specific way based on a country in which the service is to be consumed, based on a subscription a user has, based on the device or type of device on which the software is intended to run and the like. One approach to this is to build a software application that covers all these options and selects a desired behaviour based on information, such as a user profile or other locally stored information, when the software is executed. To cover all the possible options, such a software application will be large in size and have significant persistent storage memory requirements.

GB2311390A, in an abstract, states that "A client is arranged so that at power up it makes a request to a server for first boot code which allows the client to boot from its own mass storage. Since the OS is not sent from the server over the network, traffic flow is eased whilst strict control of client software type is maintained. The configuration of a client may be checked prior to software, particularly OS, installation by a server. The server, detecting a new client on the network, down-loads scan code onto the client. The client then runs the scan code and returns hardware configuration data to the server. If the OS of the client is to be modified then the server sends different, second boot code to the client which instructs the client to boot (a new OS) directly from the server. The OS from the server is then installed on the client mass storage device, and subsequent IPLs take place using the first boot code.".

GB2311388A, in an abstract, states that "Graphic user interface apparatus, for a server computer system which is connectable to a plurality of client computer systems in a computer network, comprises means for displaying a plurality of client indicators, each signifying a different one of the client computer systems, and a plurality of profile indicators, each signifying a different function stored in the server computer system and executable by one or more of the client computer systems. Means is provided for associating a selected profile indicator with a selected client indicator. Loading means loads, in response to the association, the function signified by the selected profile indicator from the server computer system to the client computer system signified by the selected client indicator.".

US9170784B1, in an abstract, states that "Methods, systems, and apparatus, including computer programs encoded on computer storage media, for creating mobile device applications. In one aspect, a method includes determining that a user has entered one or more user inputs into an integrated development environment, to select or arrange a component that defines a portion of an application, and transmitting interpreter code that corresponds to the component to a mobile device, where the interpreter code, when interpreted by a command interpreter on the mobile device, causes the mobile device to generate a mock-up of the portion of the application defined by the component.".

Web applications are software applications, typically written in JavaScript, that are served to a client device inside a web browser and run in the web browser. A popular approach for implementing a web application is to provide a single page application (SPA) that is loaded in a single browser page request and, once downloaded, runs locally. Since a SPA needs to be fully downloaded before it is run, the large size of an application covering many options as described above is problematic for web applications and in particular SPAs.

### SUMMARY

Aspects of the invention are set out in the independent claims, with optional features of embodiments set out in the dependent claims.

A computer-implemented method of preparing a software application for download is disclosed. The method comprises receiving source information comprising source code for a software application. The source code comprises a source code portion for each of a plurality of features of the software application. A plurality of settings is received, each setting identifying a subset of the plurality of features. A respective set of (one or more) source code portions is identified for each of the plurality of settings and a respective specific application for each of the plurality of settings is built using the respective sets of source code portions. The specific applications are stored ready for downloading of each specific application in response to a download request for the software application identifying the respective setting. Each source code portion can be built separately into separate executables. Each feature designates a characteristic or function of the software application and a presence, absence or value of a feature determines a source code portion to be used.

The source code portions may be identified by reading a configuration file that maps settings to corresponding sets of source code portions and using this information to package or compile the identified set for each setting to build the corresponding specific application. In some implementations, in addition or alternatively, the source code may be automatically parsed to identify the sets of source code portions, either providing input to a compiler or generating a configuration file as described above. Parsing may comprise searching the source code for flags or keywords, searching configuration information included with the source information to find configuration information identifying source code for a feature and the like. Building the respective applications may comprise resolving dependencies in, compiling and linking the source code in each set.

Building the specific applications may comprise one or more of compiling, linking, optimising and the like of the source code. Compiling the source code may comprise compiling to native code for a target machine or transpiling the source code to a different language of similar abstraction level. For example, the source code may be written in Javascript ES6+ and may be transpiled to JavaScript ES5. In some implementations, building the specific application does not involve compiling or the like but may comprise packaging the source code portions for each set without any compiling or the like to form the specific applications. In these implementations the language of the source code of the software application is the same as the language of the specific applications, for example the same version of JavaScript such as ES6+, and the build process involves selecting the relevant code portions and packaging them for each specific application.

By producing and making available for download a set of specific applications in this way, each specific application will only have the code required for its specific setting and will therefore be smaller than an application maintaining all options and deciding on the required ones at run time. Using specific applications built in this way therefore requires less storage and memory to execute the applications at a client and enables the specific application to be downloaded relatively faster than the full software application. By providing an automated build pipeline in the way described above, with building of a set of specific applications triggered by a change in source code of the software application, the software application can be developed and maintained like a conventional (all options) application, for example an SPA, while producing lean specific applications that require less resources to be downloaded and executed. This approach therefore avoids the additional effort of separately developing and maintaining each specific application.

Each source code portion may correspond to a given feature but it will be appreciated that the source code portions may be overlapping, for example source code may be shared between different service providers, countries and languages, as example of features. The term "feature" is used to designate a given characteristic, such as country, language or end service provider for the software, or a given function, such as a media player or a content catalogue. A feature can either be present or absent (a certain viewer arrangement or account page for example) or can take one of a plurality of values (language or service provider for example) but in either case the feature absence, presence or value determines code portions to be used. A setting is thus the collection of features and their values, whether the value is binary (for example presence or absence), one of a number of possible values (for example a flag identifying a service provider) or any other numeric value indicative of a feature.

Storing may comprise storing all specific applications in a data centre or in a plurality of data centres, for example replicating the applications in geographical locations or storing applications relevant to a specific geographic location in a data centre close to or in that location. The request may identify the setting by a look-up code in conjunction with a table identifying a feature setting for each look-up code, by location, device type and/or other information read from a client device. In one specific example, identification may be by way of a user identifier, for example read from a cookie on a client device, the setting for the user being identified in a user profile of the user, for example.

The plurality of features may comprise one or more of: country specific adaptations; device specific adaptations; a language of a user interface provided by the software application; functionality specific to a service provider or intermediary of a service provided using the software application; a payment functionality; a content viewing functionality; a content catalogue functionality; a media player; a social media functionality; a content commenting functionality and an account management functionality. In one example, the specific applications are created for a set of possible combinations of target country and device where the software application is to be run. In another example, the specific applications are created for a set of combinations of end service providers / intermediaries and relevant country (since one service provider / intermediary may have different requirements for different countries) and target device. For the avoidance of doubt, it can be noted that some features may be mutually exclusive (e.g. only one language or service provider for any one specific application) while others can be combined, for example a service provider may operate in different languages, offering different payment functionalities depending on the country of a user and different combinations of content players and catalogues.

The software application may comprise conceptual parts having a specific functionality, such as an account management functionality, a sign in functionality, a media player functionality, a media catalogue functionality, a social media functionality and the like. Such parts are referred to as "chapters" in this disclosure. Each chapter may have one or more corresponding source code portions, which may or may not be overlapping. For example, a chapter for account management may have a corresponding code portion in each language available and, correspondingly, the code portions for each language may be distributed between different chapters.

In some such implementations, the method may comprise identifying a respective set of source code portions for each of the chapters with each of the plurality of settings, so that a resulting number of specific applications is equal to the number of chapters multiplied to the number of settings if all settings are applicable to each of the chapters. Building a respective specific application may comprise building a respective specific application with each of the plurality of settings for each of the chapters using the respective sets of source code portions, so that the number of specific applications equals the number of sets. Storing the specific applications may then comprise storing the specific applications for each chapter for downloading of each specific application in response to a download request identifying the respective setting and chapter.

Advantageously, splitting the software application into chapters that can be built independently and maintaining a repository of such independently built applications allows a client to only load a specific application for a required chapter (functionality) at a time, thereby reducing the download time at the outset. Additionally, splitting the application up in this way allows it to be developed and maintained in a modular manner, with each chapter capable of being worked on by a respective team. The terms "specific applications" and "chapter" may be used interchangeably in this disclosure where appropriate in context.

In some other implementations, the software application also may comprise a plurality of chapters, each chapter having a specific functionality, for example as described above. Each chapter also may have one or more corresponding source code portions. The source code for each chapter can be tested substantially independently of the source code of the other chapters and may even be capable of separate compilation, as described above. In such implementations, the method may comprise selecting for each setting a subset of the plurality of chapters required by the setting and identifying the respective set of source code portions within the subset of chapters, to produce a specific application having the required chapters for each setting in one specific application.

In some implementations, the method may comprise collecting statistics on the usage of features and/or requests for missing features during use of a specific application by one or more users and generating a new setting based on the statistics and the current setting of the specific application. The method may then comprise building a new specific application for the new setting; and storing the new specific application for downloading in response to a download request identifying the new setting. The new setting may have a requested missing feature added, for example in response to a single request or a threshold number of request for the missing feature. Alternatively or additionally, the new setting may have an infrequently or unused setting removed. In some implementations, the method may comprise receiving a request for a missing feature from a specific application running at a client device; building a new specific application comprising the features of that specific application and the missing feature, the new specific application corresponding to a new setting, and storing the new specific application for downloading in response to a download request identifying the new setting.

Also disclosed is a computer-implemented method of providing access to a software application from a server to a client device over a communications network. The method comprises receiving a request to download a software application having a plurality of features and serving a bootstrap application to the client device in response. The bootstrap application is configured to read information stored on the client device to determine a specific application to be loaded, the specific application having a subset of the features of the software application. Subsequently, a request for a specific application is received from the bootstrap application and the specific application is served to the client device in response to the request from the bootstrap application.

Advantageously by first providing a bootstrap application, which may be lightweight and limited in functionality and configured to determine from local information which specific application is required as described below, the correct specific application can then be served instead of serving the full software application, thereby reducing bandwidth requirement.

The request may comprise information read by the bootstrap application from the client device and the method may comprise processing the information to determine the specific software application corresponding to the request. Alternatively, the processing may happen at the client device and the request may directly identify the specific application or corresponding setting.

In some implementations, the software application may comprise a plurality of chapters, as described above, and the specific application served provides the functionality of one of the chapters. In such implementations, the method may comprise receiving a further request for a further specific application from the bootstrap application, which provides the functionality of a further one of the chapters and serving the further specific application to the client device in response to the further request. The further request may be sent by the bootstrap application managing the loading of specific applications or by a running specific application when the need for the further specific application is encountered. In this way, by loading the software application chapter by chapter, bandwidth requirements may be reduced even further.

Also disclosed is a computer-implemented method of requesting a software application for downloading to a client device over a communications network. The method comprises, using an application received on the client device in response to a request to download the software application, reading local information stored on the client device and sending a request for a specific software application over the communications network. The request is based on the local information and the specific software application has a subset of features of the software application. These steps may be implemented by a bootstrap application as described above. The request may comprise the local information. The local information may comprise user credentials and/or other information. The local information in the request may then be processed at a server to decide on a specific application that is required. Alternatively, this processing may happen locally and the request may comprise an identifier of the setting and hence the specific application that is required to be downloaded.

In some implementations, the software application comprises a plurality of chapters as described above, and the specific application provides the functionality of one of the chapters. In such implementations, the method may comprise receiving a request for a further specific application, for example from a specific application that is currently running, such as by way of a call back, wherein the further specific application provides the functionality of a further one of the chapters and sending a request for the further specific application to a server over the communications network in response to the request.

The request may be received from the specific application or a web browser in which the specific application runs, for example in response to a user input. The method may be carried out by a bootstrap application as described above. The bootstrap application may be running in web browser and the request may be from the specific application via its user interface or from a user entering a URL in the browser, i.e. from the browser. Further disclosed is a computer-implemented method of accessing a feature of a software application. The method comprises running a first version of the software application having a subset of features of the software application excluding the feature to be accessed and a user interface comprising a user-selectable option for accessing the feature and sending, in response to a user selecting the user-selectable option, a request is sent for a second version of the software application having a set of features of the software application including the feature to be accessed. The method further comprises receiving the second version of the software application and running the second version of the software application in place of the first version to provide access to the feature to be accessed.

In any of the disclosed implementations, the software application may be a web application running in a web browser or similar interface, or a native application interacting directly with the operating system (OS) of the device running it. In either case, the software application may be a media consumption application comprising a video streaming functionality.

The disclosure further extends to one or more computer-readable media storing coded instructions that, when executed on a processor, implement a method as described above and to a computer system, for example a client device where appropriate in context, comprising such computer readable media and a processor configured to execute the coded instructions. The disclosure extends also to a computer system or, where appropriate, client device comprising means for doing the method steps set out above.

### BRIEF DESCRIPTION OF THE DRAWINGS

Some specific implementations of the invention are now described by way of example and with reference to the accompanying drawings, in which:
Figures 1A, 1B and 1C illustrate environments for loading and executing specific applications corresponding to respective feature settings;
Figure 2 illustrates processes for maintaining a repository of specific applications;
Figure 3 illustrates a data structure defining feature settings;
Figure 4 illustrates a data structure defining a settings identifier;
Figure 5 illustrates a process for serving a specific application;
Figure 6 illustrates processes for requesting and executing specific applications;
Figure 7 illustrates a user interface providing access to features not included in loaded specific application;
Figure 8 illustrates a client-side process for handling a missing feature request;
Figure 9 illustrates a process updating a set of specific applications based on a missing feature request;
Figure 10 illustrates a process for collecting statistics on missing features;
Figure 11 illustrates a software production and maintenance system for implementing some of the disclosed processes;
Figure 12 illustrates a communications network comprising an execution platform and server for implementing some of the disclosed processes; and
Figure 13 illustrates a computing platform for implementing some of the disclosed processes, the software production and maintenance system, execution platform and/or server.

### DETAILED DESCRIPTION

In overview, the present disclosure relates to the building, serving, loading and using of software applications, in particular web application such as SPAs, in a way that enables the size of applications to be reduced. The present disclosure is particularly relevant in the case of applications that have many different settings of features of the application, such as one setting per service provider and country in cases where the application is provided in multiple countries by multiple service providers, for example. The disclosed approaches enable a reduction in application size by building specific applications that have the features / feature values required for each setting and then loading the specific application that is required for a setting that applies to a client device or user account requesting the application.

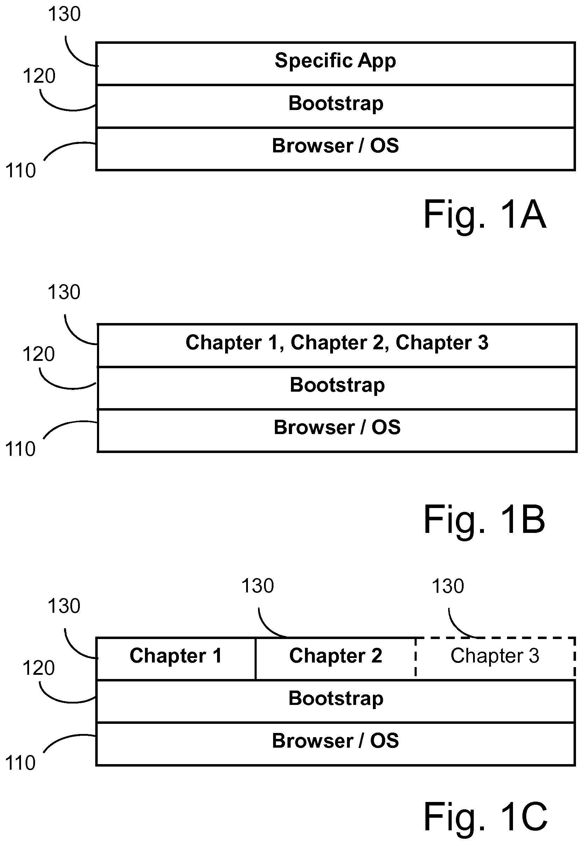

With reference to Figure 1A, in one implementation a light application referred to herein as a bootstrap 120 is configured to run in a web browser 110 in response to a request from the web browser 110 to access the software application. The bootstrap 120 reads local information from the environment in which the web browser runs, for example identifying a service provider making the service provided by the software application available, a country associated with the provision of the service, a user profile or identifier, an authentication token and the like. The bootstrap 120 uses the local information to load a specific application specifically adapted based on the local information, for example having features and customisations of a service provider, omitting features not available for the country in question, omitting a sign-in page if a valid authentication token is found and so forth. Processes for creating specific applications from the full software application and for requesting and serving the specific applications are described in detail below.

While the specific disclosure is made in terms of the example of a web application running in the web browser 110, it will be appreciated that the disclosure is not so limited and is more widely applicable, for example for other web access interfaces like those provided in smart televisions or set-top boxes. Equally, it will be appreciated that the disclosure is applicable to other execution environments, for example the bootstrap 120 and/or specific application 130 running directly in a native operating environment. The specific disclosure is made in terms of a media access application providing access to media content, for example streaming video, and in particular media content provided with a subscription model. In one specific example, the media content is sports content, such as live or recorded sports matches, for example soccer, football, basketball, tennis and the like.

With reference to Figure 1B, in the implementation of the specific application 130, the software application is written in a way so that it has separate portions of source code that can be built separately into separate executables, thereby allowing different teams to work on the different portions. These portions are referred to as chapters in this disclosure. Chapters may provide respective functionalities like: sign-in; account generation; account management; content management; content catalogue; content player; content commenting and other social media integration; settings and preferences. In addition to enabling development by several teams, the specific application 130 may be selected to have only the chapters that are required, as determined based on the local information. Accordingly, the footprint of the specific applications 130 can be further reduced by stripping functionality that is not required in terms of chapters from each specific application 130. Again, this is described in more detail below.

With reference to Figure 1C, in further implementations based on splitting the software application into chapters as described above, the footprint of loading the specific application 130 can be further reduced by making each specific application 130 specific to a corresponding chapter, meaning that each chapter is loaded separately as a corresponding specific application, so that chapters are loaded only when they are needed. Since each chapter, in these implementations, corresponds to a specific application 130, the terms are used interchangeably in this context. In the example illustrated in Figure 1C, chapters 1 and 2 have been loaded already, while chapter 3 is not (yet) required and has not been loaded, as indicated by the broken lines. In these implementations, the role of the bootstrap 120 is, in some implementations, expanded beyond the initial loading of a specific application 130 to coordinate the loading of further specific applications 130 corresponding to subsequent chapters, coordinating call backs from one chapter 130 requesting another one, for instance. The functionality of the bootstrap may further include implementation of deep linking directly to a given chapter by intercepting URL requests entered in the web browser 110, as well as the management of resources common to the specific applications 130, such as a common cache of resources such as fonts, CSS files, libraries such as java script libraries, authentication tokens such as JSON Web Tokens (JWT) and the like.

In summary, the bootstrap 120, which may be implemented as a light application comprising a HTML and a Javascript file, may have one or more of the following functionalities, as required by the specific implementation:
- Loading specific applications / chapters based on local information or call-backs from other chapters
- Deep linking directly to chapters
- Accessing local information
- Reading and verifying tokens such as JWT to detect if a user is authenticated or not and loading a chapter accordingly
- Caching resources (javascript libraries, CSS files, fonts...)
- Consuming the following services:
   ∘ Startup
   ∘ ResourceStrings
   ∘ RefreshToken (this will be called just once from the bootstrap and each chapter that requires authentication will have logic embedded inside itto process the RefreshToken)

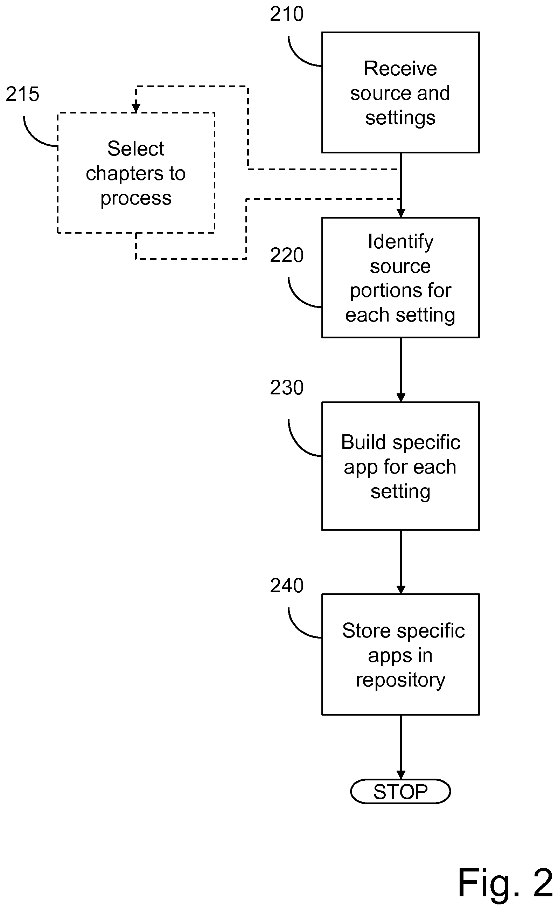

Turning now to Figures 2, 3, 4 and 11, a process for creating a set of specific applications for a corresponding set of feature settings provides an application generation automation pipeline 1120 between a source repository 1110 and an application repository 1130. The process comprises a step 210 of receiving source code for the software application including (potentially overlapping) code portions for the required specific applications or chapters corresponding to required feature settings. Receiving the source code and settings may involve a trigger detecting changes in the source repository 1110 or the required feature settings and trigger the remaining steps of the process in response to detecting the change.

Many different combinations of feature settings can be processed with the disclosed process. For example, the software application may be provided as a direct service by the software application developer and as a white-labelled or branded service provided on behalf of other service providers and in each case in different countries. Equally, the target device or environment on which the software application is to be run may also be one factor in the combination of settings giving rise to a set of specific applications / chapters 130 for distribution. However, in some implementations, source code is written separately for each target device in respective repositories 1110 and processed independently, sequentially or in parallel. The resulting specific applications 130 may in turn be stored in the same or separate repositories 1130.

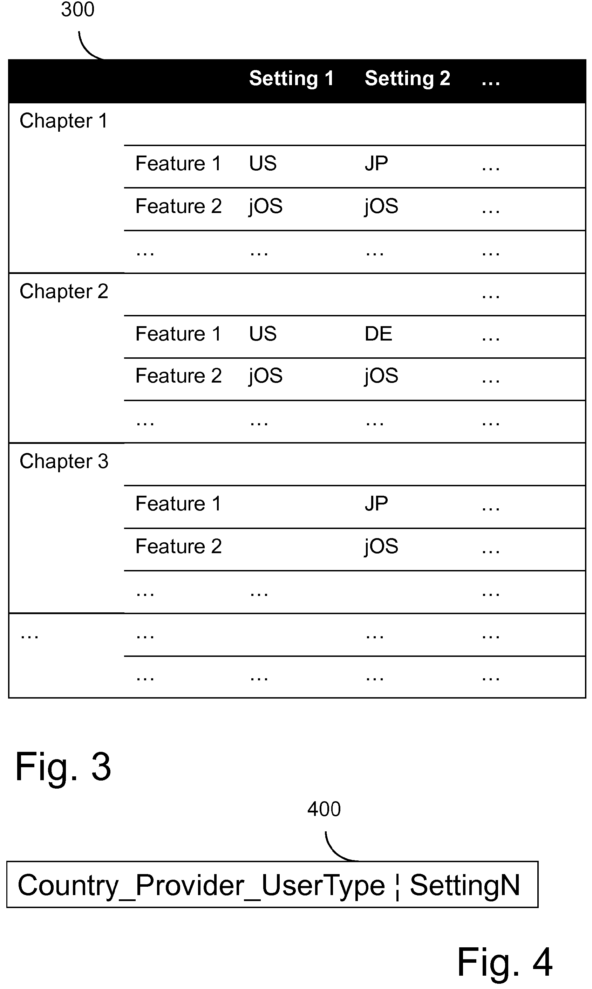

With reference to Figures 3 and a data structure 300 for defining feature settings in some implementations comprises a list of chapters, for example {My Account / Sign In; Content Catalogue; Content Player; Content Commenting; ...}. For each chapter, a table is provided that defines the features of each chapter, for example {Country; Language; Execution Environment; Functionality Features}. In another example, as illustrated in Figure 3, a first and a second chapter are available in the US and JP with different, potentially overlapping, functionality and is in each country available on an execution platform "jOS" in two different settings Setting 1 and Setting 2. A third chapter is not available in Setting 1 but is available in Setting 2 in Japan, on the same platform. The data structure 300 associates a specific setting of features presence or absence and feature values with a setting identifier (Setting 1, Setting 2, ...). The selection of a feature setting based on local information uses, in some implementation, a separate data structure 400 linking local information (for example a country, a provider, a user type) with a corresponding setting identifier. Local information further may comprise an identifier of the execution platform, such as device type and/or operating system on the device requesting the software application.

Returning to Figure 2, at step 215, in cases where the software application is structured in chapters as discussed above, the chapters to process are selected. In implementations described above with reference to Figure 1B, each chapter source code provides its code for the specific application 130 of each feature setting. In implementations in which each chapter is built into a separate specific application 130 as discussed above with reference to Figure 1C, each chapter is built into a separate specific application 130 for each feature setting, either in sequence or in parallel for each chapter.

At step 220, the automation pipeline 1120 identifies in the original the source code (of the software application or of each chapter) the source code required for each feature setting, for example by accessing a configuration file that identifies the relevant source code portion(s) for each setting or by parsing the original source code. Parsing the original source code and/or configuration files required for building the source code may involve a text search for certain keywords associated with each feature setting, a search for predefined flags applied by developers to the code or any other suitable method.

At step 230, the identified source code for each feature setting is built, in some implementations compiled and linked, into corresponding specific applications or chapters 130, as the case may be, using the corresponding portions of configuration information and relevant libraries. In some implementations the source code is transpiled, for example from one version of JavaScript to another version. However, in some implementations, the specific applications are built by packaging the identified source code for each feature setting, that is the specific applications remain in the same language as the original source code, for example JavaScript and more specifically the same version of JavaScript. The built specific applications are then stored in the application repository 1130 for subsequent download on request from a client device as described below. Steps 220 to 240 can be executed sequentially stepping through the feature settings one by one or in parallel. Likewise, the process may run afresh for each detected change or incrementally after an initial built by only re-building or adding specific applications 130 affected by a change in source code, configuration information or feature settings.

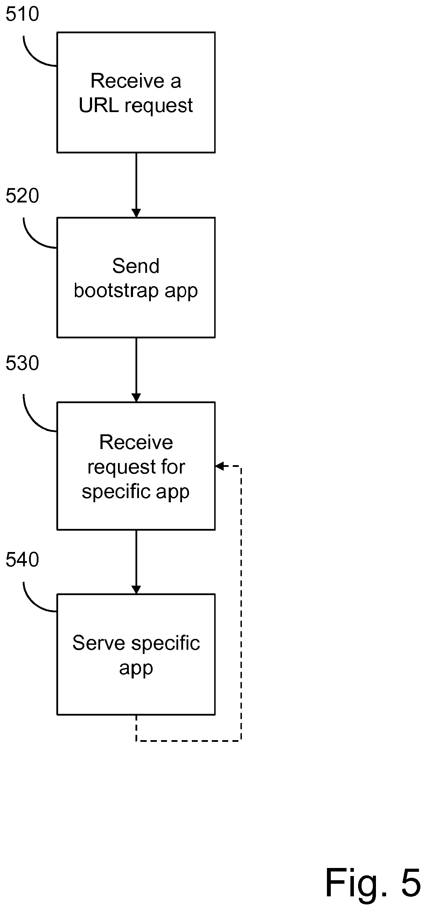

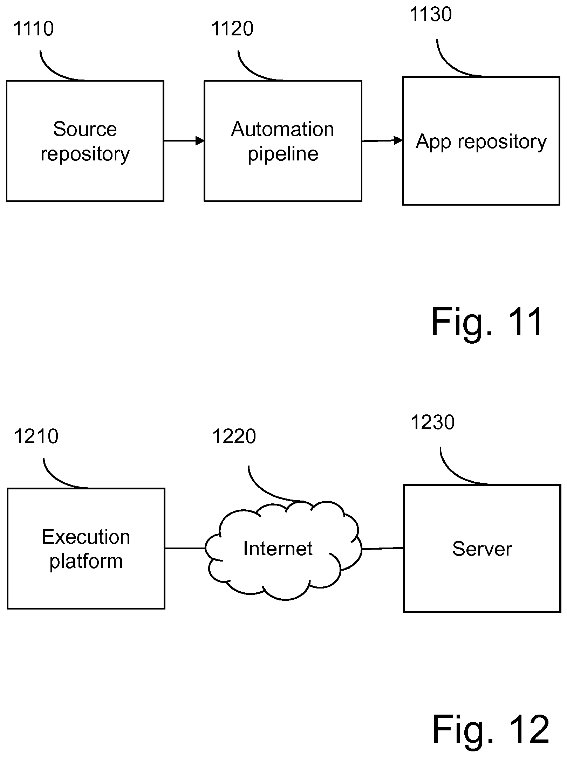

Referring to Figure 12, a required set of specific applications 130 is provided in the application repository 1130, for example at a server 1230. The server 1230 may be provided in a data centre (or replicated or geo-located at a number of data centres). The specific applications 130 can be served over a communication network 1220, such as a packetized data network, for example the Internet, to an execution platform 1210, such as a web browser or a native operating system environment, at a client device. With reference to Figure 5, the server 1230 receives a request, for example in the form of a URL, to download the software application at step 510. At step 520, in response to the request, the server sends a bootstrap 120 to the client device. The bootstrap 120 is executed in the execution platform 1210 at the client device and generates a request for a specific application or chapter 130, as described in detail below. At step 530, the request is received by the server and the requested specific application is served to the client device at step 540. The request comprises an identification of the specific application or chapter 130 to serve, for example a setting identifier as discussed above with reference to Figure 3, or may comprise information from which the appropriate specific application or chapter can be identified, as discussed above with reference to Figure 4.

In implementations which download specific applications 130 at a chapter level of granularity as discussed above with reference to Figure 1C, once an initial chapter has been requested by the bootstrap 120 and has been served and executed in the execution environment 1210, additional chapters may be requested and served, so that the process described above with reference to Figure 5 loops back to step 530 to server the next required chapter to the client device. Some implementations of the generation of a sequence of requests for required chapters are discussed below.

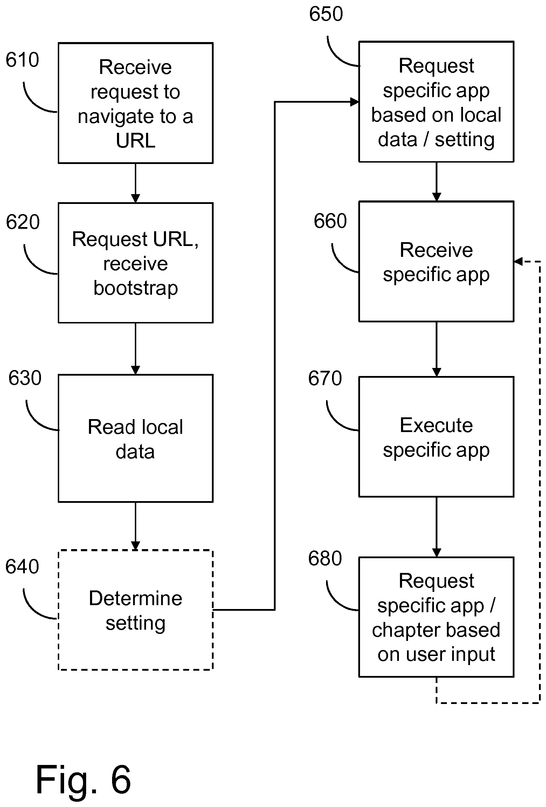

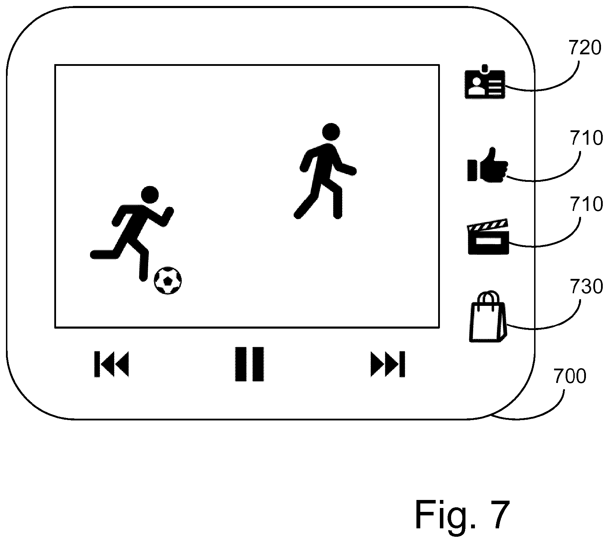

With reference to Figures 6 and 7, a process for loading a software application on a client device comprises a step 610 of receiving a request from a user, for example when the user enters the address in a web browser as the execution environment 1210 or clicks a link to access a URL associated with the software application. The described process makes reference to the loading of the software application in a web browser environment but it will be apparent to the skilled person how to adapt the described steps to loading specific application 130 into any other execution environment 1210. At step 620, the web browser requests the URL and receives the bootstrap 120 from the server 1230 over the communications network 1220. At step 630, the bootstrap executes and reads local information such as one or more of: device type, make and/or model; operating system type and/or version; cookies stored on the client device; a user identifier; a user token, optionally a securely authenticated token; a service provider associated with the device; a country associated with the device; the location of the device; and the like. Alternatively or additionally, any other available local information may be read.

At step 640, the bootstrap determines a feature setting for the specific application 130 to be loaded. Step 640 may comprise determining a device type and country of the device loading the software application, for example for transmission of that information to the server for selection of the required specific application by the server.

In implementations as described above with reference to Figure 1C, where chapters 130 are loaded one by one, the bootstrap determines the chapter to load as well as the feature setting. For example, on finding no token identifying an authorised used on the client device, the bootstrap 120 may request a sign-up chapter (for example specific to a service provider associated with the client device or execution environment 1210). If a token authorising access to the service is found on the client device and is authenticated, then a media catalogue, for example, or other start page giving access to the service provided by the software application may be requested, skipping the sign-in chapter. Again, the bootstrap may determine the information to transmit to enable selection of the specific application or chapter server side and not carry out further processing based on that information. For example, the bootstrap may determine country and device information and check for the presence of an authentication or other sign-in token and transmit that information to the server for selection of the required specific application / chapter to serve.

At step 650 the specific app or chapter 130 is requested based on the determined feature setting and/or state of the client device / the user, for example by transmitting a request that includes the information necessary to determine server-side the specific application to serve, or the outcome of any further determination, as the case may be.

It will therefore be appreciated that specific processing at step 640 (or step 640 as a whole) is optional at the client device and that, instead, the bootstrap may send the local information as part of the request at step 650, the determination of the required feature setting and/or chapter then being made server-side. In either case (specific processing or determining of information to transmit), the specific applications may be pre-prepared server-side and ready for download in response to a corresponding respective request, as described above.

The requested specific application or chapter 130 is received at step 660 and executed at step 670. In some implementations, in particular where a single specific application is loaded as in the implementations described above with reference to Figures 1A and 1B, step 660 may terminate the client-side loading process. In other implementations, an in particular in implementations where chapters are loaded incrementally, as described above with reference to Figure 1C, a request for a further specific application or chapter 130 may be generated at step 680, for example based on user input and the process loops back to step 660. This loop may be executed a number of times, in particular each time a new chapter 130 is required to be loaded, although in some implementation, a chapter that has been loaded is cached at the client device so that it need not be loaded again if the user wishes to return to that chapter. In some implementations, the caching of chapters, the checking for cached chapters and/or in some instances a decision whether to reload a chapter or access the cached copy are implemented by the bootstrap 120.

In one example of step 680, once sign-up has completed successfully, the sign-up chapter may generate a call back for a media catalogue chapter, in response to which the bootstrap 120 sends a request for the media catalogue chapter to the server, which then serves the media catalogue chapter to the client device. In another example, a user is currently accessing a media player chapter with a user interface 700 as illustrated in Figure 7, for example after having completed the sign-up chapter and selected content to be played in a catalogue chapter. The user interface 700 provides selectable on screen options for a number of features 710 that are provided by the media playback chapter itself, such a social media liking function and a function to select different cameras and viewpoints. Other options 720 provide access to functions that are provided by other chapters of the software application, for example an option to access an account management functionality. If the user selects such a feature, the current chapter 130 (media player) creates a call back to the bootstrap 120 to load the required next chapter 130 and the request is managed by the bootstrap 130 either by requesting the next chapter 130 from the server or accessing a cached copy. It can be noted that in some implementations, instead of a call-back to the bootstrap 120, a given chapter 130 may directly request the download of the next chapter 130 (optionally including a check for a cached copy in some implementations) when required.

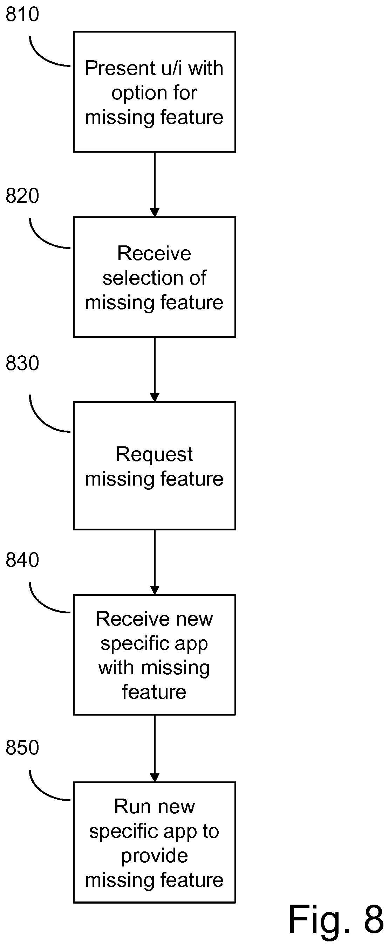

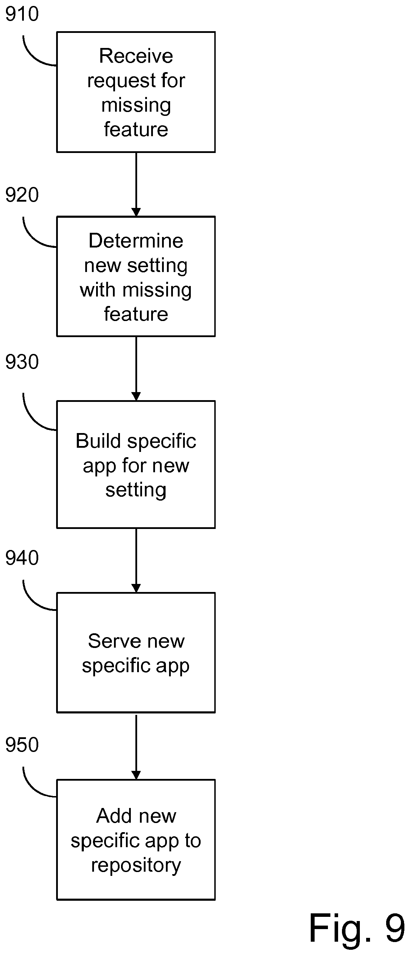

The user interface 700, in some implementations, may provide further options 730 to access functionality not provided by any of the chapters according to the feature set determined based on the local information, for example a shopping functionality in the illustrated example in Figure 7. The handling of a user request to action such a request for a missing feature is now described with reference to Figures 8 and 9.

With reference to Figure 8, a client-side process for actioning a request for a missing feature starts with a step 810 of causing display of a user interface, such as the user interface 700, to a user with an option 730 for a feature that is missing from the current specific application 130 because it is not specified in the corresponding feature setting (and hence also not available in another chapter in the relevant implementations). At step 820, a user selection of the missing feature is received, and the missing feature is requested at step 830 from the server, either by the specific application 130 or the bootstrap 120, as described above. In some implementations, a new specific application 130 providing the missing feature is received at step 840 and executed a step 850 to provide the missing feature. In other implementations, however, the missing feature is not provided from the server in response to the request but rather is noted server-side to influence future feature settings and hence the subsequent provision of new specific applications. In such implementations, a message may be displayed in the user interface 700 informing the user that the missing feature is not currently available with the settings for the user but may become available in the future.

With reference to Figure 9, a corresponding server-side process, for example at server 1230, comprises a step 910 of receiving a request for a missing feature and a step 920 of determining a new feature setting comprising the new feature. At step 930, a new specific application 130 corresponding to the new feature setting is built as described above and served at step 940 to the client device from which the request at step 910 was received. The new specific application 130 is added to the application repository 1130 at step 950, which in some implementations may include updating the table 300 by adding the new feature setting and updating the mapping 400 linking the local information (for example user identifier or profile) to the new feature setting so that the new feature remains available at the client device in the future.

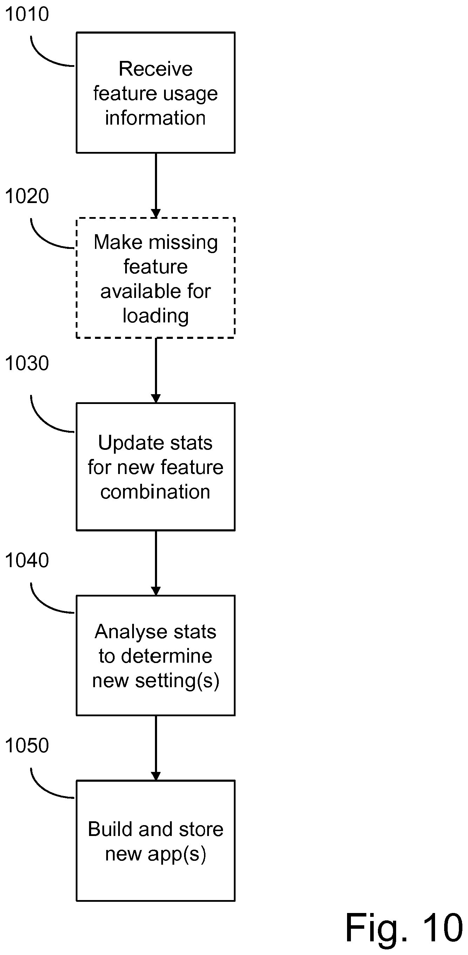

With reference to Figure 10, an alternative server-side process, which may also be used in conjunction with the process described above with reference to Figure 9, comprises a step 1010 in which feature usage information is received. The feature usage information may comprise a missing feature request as described above, in which case the missing feature may be made available, for example as described above, at step 1020. Alternatively, in some specific optional implementations, a message that the feature is unavailable but may become available in the future may be returned at step 1020, or step 1020 may be omitted. The feature usage information may comprise, additionally or alternatively, other information from the client device, for example indicating which features of a specific application are used or not used at a specific client device or by a specific user profile. For any received feature usage information, statistics are updated for new feature combinations not currently provided in the repository 1130, for example existing feature combinations with features added, removed or changed. The updated statistics are analysed at step 1040 to determine any (if any) new feature settings to be provided, for example comparing respective statistics and corresponding thresholds to determine if any new features or feature combinations are to be provided. If any new feature settings are determined to be required, the corresponding specific applications are built and stored in repository 1130, in some implementations also updating the table 300 and mapping 400.

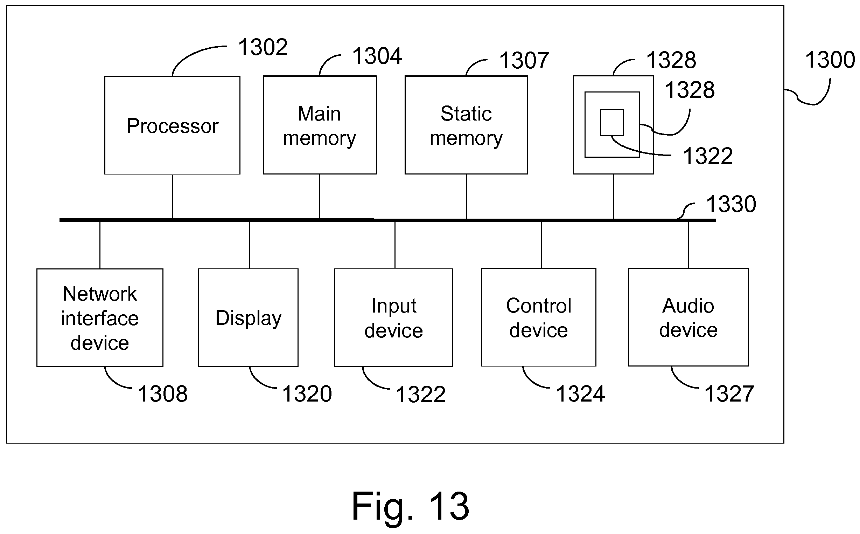

Reference has been made above to various computing devices and systems, for example the system implementing the source repository 1110, automation pipeline 1120 and application repository 1130, the client device implementing the execution platform 1210 and the server 1230. Figure 13 illustrates a block diagram of one implementation of a computing device 1300 within which a set of instructions, for causing the computing device to perform any one or more of the methodologies discussed herein, may be executed, and which may implement one or more of the computing devices referenced herein. The computing device may be connected (e.g., networked) to other machines in a Local Area Network (LAN), an intranet, an extranet, or the Internet. The computing device may operate in the capacity of a server or a client machine in a client-server network environment, or as a peer machine in a peer-to-peer (or distributed) network environment. The computing device may be a personal computer (PC), a tablet computer, a set-top box (STB), a Personal Digital Assistant (PDA), a cellular telephone, a web appliance, a server, a network router, switch or bridge, or any machine capable of executing a set of instructions (sequential or otherwise) that specify actions to be taken by that machine. Further, while only a single computing device is illustrated, the term "computing device" shall also be taken to include any collection of machines (e.g., computers) that individually or jointly execute a set (or multiple sets) of instructions to perform any one or more of the methodologies discussed herein.

The example computing device 1300 includes a processing device 1302, a main memory 1304 (e.g., read-only memory (ROM), flash memory, dynamic random-access memory (DRAM) such as synchronous DRAM (SDRAM) or Rambus DRAM (RDRAM), etc.), a static memory 1306 (e.g., flash memory, static random-access memory (SRAM), etc.), and a secondary memory (e.g., a data storage device 1318), which communicate with each other via a bus 1330.

Processing device 1302 represents one or more general-purpose processors such as a microprocessor, central processing unit, or the like. More particularly, the processing device 1302 may be a complex instruction set computing (CISC) microprocessor, reduced instruction set computing (RISC) microprocessor, very long instruction word (VLIW) microprocessor, processor implementing other instruction sets, or processors implementing a combination of instruction sets. Processing device 1302 may also be one or more special-purpose processing devices such as an application specific integrated circuit (ASIC), a field programmable gate array (FPGA), a digital signal processor (DSP), network processor, or the like. Processing device 1302 is configured to execute the processing logic (instructions 1322) for performing the operations and steps discussed herein.

The computing device 1300 may further include a network interface device 1308. The computing device 1300 also may include a video display unit 1310 (e.g., a liquid crystal display (LCD) or a cathode ray tube (CRT)), an alphanumeric input device 1312 (e.g., a keyboard or touchscreen), a cursor control device 1314 (e.g., a mouse or touchscreen), and an audio device 1316 (e.g., a speaker).

The data storage device 1318 may include one or more machine-readable storage media (or more specifically one or more non-transitory computer-readable storage media) 1328 on which is stored one or more sets of instructions 1322 embodying any one or more of the methodologies or functions described herein. The instructions 1322 may also reside, completely or at least partially, within the main memory 1304 and/or within the processing device 1302 during execution thereof by the computer system 1300, the main memory 1304 and the processing device 1302 also constituting computer-readable storage media.

The various methods described above may be implemented by a computer program. The computer program may include computer code arranged to instruct a computer to perform the functions of one or more of the various methods described above. The computer program and/or the code for performing such methods may be provided to an apparatus, such as a computer, on one or more computer readable media or, more generally, a computer program product. The computer readable media may be transitory or non-transitory. The one or more computer readable media could be, for example, an electronic, magnetic, optical, electromagnetic, infrared, or semiconductor system, or a propagation medium for data transmission, for example for downloading the code over the Internet. Alternatively, the one or more computer readable media could take the form of one or more physical computer readable media such as semiconductor or solid state memory, magnetic tape, a removable computer diskette, a random access memory (RAM), a read-only memory (ROM), a rigid magnetic disc, and an optical disk, such as a CD-ROM, CD-R/W or DVD.

In an implementation, the modules, components and other features described herein can be implemented as discrete components or integrated in the functionality of hardware components such as ASICS, FPGAs, DSPs or similar devices.

A "hardware component" is a tangible (e.g., non-transitory) physical component (e.g., a set of one or more processors) capable of performing certain operations and may be configured or arranged in a certain physical manner. A hardware component may include dedicated circuitry or logic that is permanently configured to perform certain operations. A hardware component may be or include a special-purpose processor, such as a field programmable gate array (FPGA) or an ASIC. A hardware component may also include programmable logic or circuitry that is temporarily configured by software to perform certain operations.

Accordingly, the phrase "hardware component" should be understood to encompass a tangible entity that may be physically constructed, permanently configured (e.g., hardwired), or temporarily configured (e.g., programmed) to operate in a certain manner or to perform certain operations described herein.

In addition, the modules and components can be implemented as firmware or functional circuitry within hardware devices. Further, the modules and components can be implemented in any combination of hardware devices and software components, or only in software (e.g., code stored or otherwise embodied in a machine-readable medium or in a transmission medium).

Unless specifically stated otherwise, as apparent from the following discussion, it is appreciated that throughout the description, discussions utilizing terms such as "receiving", "determining", "comparing ", "enabling", "maintaining," "identifying," "parsing", "building", "linking", "compiling", "storing", "serving", "reading", "displaying", "causing", "sending", "requesting", "providing", "executing", "running" or the like, refer to the actions and processes of a computer system, or similar electronic computing device, that manipulates and transforms data represented as physical (electronic) quantities within the computer system's registers and memories into other data similarly represented as physical quantities within the computer system memories or registers or other such information storage, transmission or display devices.

It is to be understood that the above description is intended to be illustrative, and not restrictive. Many other implementations will be apparent to those of skill in the art upon reading and understanding the above description. Although the present disclosure has been described with reference to specific example implementations, it will be recognized that the disclosure is not limited to the implementations described but can be practiced with modification and alteration within the scope of the appended claims. Accordingly, the specification and drawings are to be regarded in an illustrative sense rather than a restrictive sense. The scope of the disclosure should, therefore, be determined with reference to the appended claims.

## Claims

1. A computer-implemented method of preparing a software application for download, the method comprising:
receiving (210) source information comprising source code for a software application, wherein the source code comprises a source code portion for each of a plurality of features of the software application, wherein the source code portions can be built separately into separate executables, and wherein each feature designates a characteristic or function of the software application and a presence, absence or value of a feature determines a source code portion to be used;
receiving (210) a plurality of settings, each setting identifying a subset of the plurality of features;
identifying (220) a respective set of source code portions within the source information for each of the plurality of settings;
building (230) a respective specific application for each of the plurality of settings using the respective sets of source code portions; and
storing (240) the specific applications for downloading of each specific application in response to a download request for the software application identifying the respective setting.

2. A method according to claim 1, wherein the software application comprises a plurality of parts, each part having a specific functionality and each part having one or more corresponding source code portions, wherein the source code for each part can be tested substantially independently of the source code of the other parts and the method comprises selecting (215) for each setting a subset of the plurality of parts required by the setting and identifying the respective set of source code portions within the subset of parts.

3. A method according to claim 1 or 2, the method comprising:
collecting (1010, 1030) statistics on usage of features and/or requests for missing features during use of a specific application by one or more users;
generating (1040) a new setting based on the statistics and the setting of the specific application;
building (1050) a new specific application for the new setting; and
storing the new software application for downloading in response to a download request identifying the new setting.

4. A computer-implemented method of providing access to a software application from a server to a client device over a communications network, the method comprising:
preparing a software application for download in accordance with claim 1;
receiving (510), by the server, a request to download the software application;
serving (520) a bootstrap application to the client device, wherein the bootstrap application is configured to read information stored on the client device, to determine a specific application of the stored specific applications to be loaded, the specific application having a subset of the features of the software application;
receiving (530) a request for the specific application from the bootstrap application; and
serving (540) the specific application to the client device in response to the request from the bootstrap application.

5. A method according to claim 4, wherein the request comprises information read by the bootstrap application from the client device and the method comprises processing the information to determine the specific software application corresponding to the request.

6. A method according to claim 4 or 5, wherein the software application comprises a plurality of parts, each chapter part a specific functionality and wherein the specific application provides the functionality of one of the parts, the method comprising:
receiving a further request for a further specific application from the bootstrap application, wherein the specific application provides the functionality of a further one of the parts; and
serving the further specific application to the client device in response to the further request from the bootstrap application.

7. A computer-implemented method of requesting, by a client device, a software application for download to the client device over a communications network, the method comprising:
preparing a software application for download in accordance with claim 1;
receiving (620) a bootstrap application on the client device in response to a request to download the software application; and,
using the bootstrap application:
reading (630) local information stored on the client device; and
sending (650) a request for a specific software application over the communications network, wherein the request is based on the local information and the specific software application has a subset of features of the software application.

8. A method according to claim 7, wherein the request comprises the local information.

9. A method according to claim 8, wherein the local information comprises user credentials.

10. A method according to claim 7, 8 or 9, wherein the software application comprises a plurality of parts, each part having a specific functionality and wherein the specific application provides the functionality of one of the parts, the method comprising:
receiving a request for a further specific application, wherein the further specific application provides the functionality of a further one of the parts;
sending (680) a request for the further specific application to the client device in response to the request.

11. A method as claimed in any preceding claim, wherein the software application is a web application.

12. A method according to any preceding claim, wherein the plurality of features comprise one or more of: country specific adaptations; device specific adaptations; a language of a user interface provided by the software application; functionality specific to a service provider of a service provided using the software application; a payment functionality; a content viewing functionality; a content catalogue functionality; a media player; a social media functionality; a content commenting functionality; and an account management functionality.

13. A method according to any preceding claim, wherein the software application is a media consumption application (700) comprising a video streaming functionality.

14. One or more computer-readable media storing coded instructions that, when executed on processor, implement a method according to any preceding claim.

15. A computing system comprising one or more computer-readable media according to claim 14 and a processor configured to execute the coded instructions.

## Patentansprüche

1. Computerimplementiertes Verfahren zum Vorbereiten einer Softwareanwendung zum Herunterladen, wobei das Verfahren Folgendes umfasst:
Empfangen (210) von Quellinformationen, die Quellcode für eine Softwareanwendung umfassen, wobei der Quellcode einen Quellcodeabschnitt für jedes von mehreren Merkmalen der Softwareanwendung umfasst, wobei die Quellcodeabschnitte separat zu separaten ausführbaren Dateien zusammengefügt werden können und wobei jedes Merkmal eine Eigenschaft oder Funktion der Softwareanwendung bezeichnet und ein Vorhandensein, Nichtvorhandensein oder Wert eines Merkmals einen zu verwendenden Quellcodeabschnitt bestimmt;
Empfangen (210) mehrerer Einstellungen, wobei jede Einstellung eine Teilmenge der mehreren Merkmale identifiziert;
Identifizieren (220) einer jeweiligen Menge von Quellcodeabschnitten innerhalb der Quellinformationen für jede der mehreren Einstellungen;
Erstellen (230) einer jeweiligen spezifischen Anwendung für jede der mehreren Einstellungen unter Verwendung der jeweiligen Sätze von Quellcodeabschnitten; und
Speichern (240) der spezifischen Anwendungen zum Herunterladen jeder spezifischen Anwendung als Reaktion auf eine Download-Anforderung für die Softwareanwendung, die die jeweilige Einstellung identifiziert.

2. Verfahren nach Anspruch 1, wobei die Softwareanwendung mehrere Teile umfasst, wobei jeder Teil eine spezifische Funktionalität aufweist und jeder Teil einen oder mehrere entsprechende Quellcodeabschnitte aufweist, wobei der Quellcode für jeden Teil im Wesentlichen unabhängig von dem Quellcode der anderen Teile getestet werden kann und das Verfahren Auswählen (215), für jede Einstellung, einer Teilmenge der mehreren Teile, die durch die Einstellung erforderlich sind, und Identifizieren der jeweiligen Menge von Quellcodeabschnitten innerhalb der Teilmenge von Teilen umfasst.

3. Verfahren nach Anspruch 1 oder 2, wobei das Verfahren Folgendes umfasst:
Sammeln (1010, 1030) statistischer Daten über die Nutzung von Merkmalen und/oder Anforderungen fehlender Merkmale während der Verwendung einer spezifischen Anwendung durch einen oder mehrere Benutzer;
Erzeugen (1040) einer neuen Einstellung auf der Grundlage der statistischen Daten und der Einstellung der spezifischen Anwendung;
Erstellen (1050) einer neuen spezifischen Anwendung für die neue Einstellung; und
Speichern der neuen Softwareanwendung zum Herunterladen als Reaktion auf eine Download-Anforderung, die die neue Einstellung identifiziert.

4. Computerimplementiertes Verfahren zum Bereitstellen von Zugriff auf eine Softwareanwendung von einem Server für eine Client-Vorrichtung über ein Kommunikationsnetz, wobei das Verfahren Folgendes umfasst:
Vorbereiten einer Softwareanwendung zum Herunterladen nach Anspruch 1;
Empfangen (510), durch den Server, einer Anforderung zum Herunterladen der Softwareanwendung;
Übermitteln (520) einer Bootstrap-Anwendung an die Client-Vorrichtung, wobei die Bootstrap-Anwendung dazu konfiguriert ist, auf der Client-Vorrichtung gespeicherte Informationen zu lesen, um eine spezifische Anwendung der gespeicherten, zu ladenden spezifischen Anwendungen zu bestimmen, wobei die spezifische Anwendung eine Teilmenge der Merkmale der Softwareanwendung aufweist;
Empfangen (530) einer Anforderung der spezifischen Anwendung von der Bootstrap-Anwendung; und
Übermitteln (540) der spezifischen Anwendung an die Client-Vorrichtung als Reaktion auf die Anforderung von der Bootstrap-Anwendung.

5. Verfahren nach Anspruch 4, wobei die Anforderung durch die Bootstrap-Anwendung von der Client-Vorrichtung gelesene Informationen umfasst und das Verfahren Verarbeiten der Informationen umfasst, um die spezifische Softwareanwendung, die der Anforderung entspricht, zu bestimmen.

6. Verfahren nach Anspruch 4 oder 5, wobei die Softwareanwendung mehrere Teile umfasst, wobei jeder Kapitelteil eine spezifische Funktionalität aufweist und wobei die spezifische Anwendung die Funktionalität eines der Teile bereitstellt, wobei das Verfahren Folgendes umfasst:
Empfangen einer weiteren Anforderung einer weiteren spezifischen Anwendung von der Bootstrap-Anwendung, wobei die spezifische Anwendung die Funktionalität eines weiteren der Teile bereitstellt; und
Übermitteln der weiteren spezifischen Anwendung an die Client-Vorrichtung als Reaktion auf die weitere Anforderung von der Bootstrap-Anwendung.

7. Computerimplementiertes Verfahren zum Anfordern, durch eine Client-Vorrichtung, einer Softwareanwendung zum Herunterladen in die Client-Vorrichtung über ein Kommunikationsnetz, wobei das Verfahren Folgendes umfasst:
Vorbereiten einer Softwareanwendung zum Herunterladen nach Anspruch 1;
Empfangen (620) einer Bootstrap-Anwendung auf der Client-Vorrichtung als Reaktion auf eine Anforderung zum Herunterladen der Softwareanwendung; und
unter Verwendung der Bootstrap-Anwendung:
Lesen (630) lokaler Informationen, die auf der Client-Vorrichtung gespeichert sind; und
Senden (650) einer Anforderung einer spezifischen Softwareanwendung über das Kommunikationsnetz, wobei die Anforderung auf den lokalen Informationen basiert und die spezifische Softwareanwendung eine Teilmenge von Merkmalen der Softwareanwendung aufweist.

8. Verfahren nach Anspruch 7, wobei die Anforderung die lokalen Informationen umfasst.

9. Verfahren nach Anspruch 8, wobei die lokalen Informationen Benutzeranmeldedaten umfassen.

10. Verfahren nach Anspruch 7, 8 oder 9, wobei die Softwareanwendung mehrere Teile umfasst, wobei jeder Teil eine spezifische Funktionalität aufweist und wobei die spezifische Anwendung die Funktionalität eines der Teile bereitstellt, wobei das Verfahren Folgendes umfasst:
Empfangen einer Anforderung einer weiteren spezifischen Anwendung, wobei die weitere spezifische Anwendung die Funktionalität eines weiteren der Teile bereitstellt;
Senden (680) einer Anforderung der weiteren spezifischen Anwendung an die Client-Vorrichtung als Reaktion auf die Anforderung.

11. Verfahren nach einem der vorhergehenden Ansprüche, wobei die Softwareanwendung eine Webanwendung ist.

12. Verfahren nach einem der vorhergehenden Ansprüche, wobei die mehreren Merkmale eines oder mehrere von Folgendem umfassen: länderspezifische Anpassungen; vorrichtungsspezifische Anpassungen; eine Sprache einer Benutzerschnittstelle, die durch die Softwareanwendung bereitgestellt wird; eine Funktionalität, die für einen Diensteanbieter eines unter Verwendung der Softwareanwendung bereitgestellten Dienstes spezifisch ist; eine Zahlungsfunktionalität; eine Inhaltsanzeigefunktionalität; eine Inhaltskatalogfunktionalität; ein Medienabspielgerät; eine Social-Media-Funktionalität; eine Inhaltskommentierfunktionalität; und eine Kontoverwaltungsfunktionalität.

13. Verfahren nach einem der vorhergehenden Ansprüche, wobei die Softwareanwendung eine Medienkonsumanwendung (700) ist, die eine Videostreaming-Funktionalität umfasst.

14. Ein oder mehrere computerlesbare Medien, die codierte Anweisungen speichern, die, wenn sie auf einem Prozessor ausgeführt werden, ein Verfahren nach einem der vorhergehenden Ansprüche implementieren.

15. Rechensystem, das ein oder mehrere computerlesbare Medien nach Anspruch 14 und einen Prozessor umfasst, der dazu konfiguriert ist, die codierten Anweisungen auszuführen.

## Revendications

1. Procédé mis en œuvre par ordinateur pour préparer une application logicielle à télécharger, le procédé comprenant les étapes suivantes :
recevoir (210) des informations sources comprenant du code source pour une application logicielle, le code source comprenant une portion de code source pour chacune d'une pluralité de caractéristiques de l'application logicielle, les portions de code source pouvant être intégrées séparément en exécutables séparés, et chaque caractéristique désignant une caractéristique ou une fonction de l'application logicielle et une présence, une absence ou une valeur d'une caractéristique déterminant une portion de code source à utiliser ;
recevoir (210) une pluralité de paramétrages, chaque paramétrage identifiant un sous-ensemble de la pluralité de caractéristiques ;
identifier (220) un ensemble respectif de portions de code source au sein des informations sources pour chacun de la pluralité de paramétrages ;
construire (230) une application spécifique respective pour chacun de la pluralité de paramétrages en utilisant les ensembles respectifs de portions de code source ; et stocker (240) les applications spécifiques pour le téléchargement de chaque application spécifique en réponse à une demande de téléchargement pour l'application logicielle identifiant le paramétrage respectif.

2. Procédé selon la revendication 1, dans lequel l'application logicielle comprend une pluralité de parties, chaque partie ayant une fonctionnalité spécifique et chaque partie ayant une ou plusieurs portions de code source correspondantes, le code source pour chaque partie pouvant être testé sensiblement indépendamment du code source des autres parties et le procédé comprenant de sélectionner (215), pour chaque paramétrage, un sous-ensemble de la pluralité de parties requises par le paramétrage et l'identification de l'ensemble respectif de portions de code source dans le sous-ensemble de parties.

3. Procédé selon la revendication 1 ou la revendication 2, le procédé comprenant les étapes suivantes :
collecter (1010, 1030) des statistiques sur l'utilisation de caractéristiques et/ou de demandes de caractéristiques manquantes lors de l'utilisation d'une application spécifique par un ou plusieurs utilisateurs ;
générer (1040) un nouveau paramétrage sur la base des statistiques et du paramétrage de l'application spécifique ;
construire (1050) une nouvelle application spécifique pour le nouveau paramétrage ; et
stocker la nouvelle application logicielle à télécharger en réponse à une demande de téléchargement identifiant le nouveau paramétrage.

4. Procédé mis en œuvre par ordinateur pour fournir un accès à une application logicielle depuis un serveur à un dispositif client sur un réseau de communications, le procédé comprenant les étapes suivantes :
préparer une application logicielle à télécharger conformément à la revendication 1 ;
recevoir (510), par le serveur, une demande de téléchargement de l'application logicielle ;
servir (520) une application d'amorçage au dispositif client, l'application d'amorçage étant configurée pour lire des informations stockées sur le dispositif client, afin de déterminer une application spécifique des applications spécifiques stockées à charger, l'application spécifique ayant un sous-ensemble des caractéristiques de l'application logicielle ;
recevoir (530) une demande pour l'application spécifique depuis l'application d'amorçage ; et
servir (540) l'application spécifique au dispositif client en réponse à la demande provenant de l'application d'amorçage.

5. Procédé selon la revendication 4, dans lequel la demande comprend des informations lues par l'application d'amorçage depuis le dispositif client et le procédé comprend de traiter les informations pour déterminer l'application logicielle spécifique correspondant à la demande.

6. Procédé selon la revendication 4 ou la revendication 5, dans lequel l'application logicielle comprend une pluralité de parties, chaque partie de chapitre ayant une fonctionnalité spécifique, et l'application spécifique fournissant la fonctionnalité de l'une des parties, le procédé comprenant les étapes suivantes :
recevoir une demande supplémentaire d'une application spécifique supplémentaire en provenance de l'application d'amorçage, l'application spécifique fournissant la fonctionnalité d'une autre des parties ; et
servir l'autre application spécifique au dispositif client en réponse à la demande supplémentaire de l'application d'amorçage.

7. Procédé mis en œuvre par ordinateur pour demander, par un dispositif client, une application logicielle à télécharger vers le dispositif client sur un réseau de communications, le procédé comprenant les étapes suivantes :
préparer une application logicielle à télécharger conformément à la revendication 1 ;
recevoir (620) une application d'amorçage sur le dispositif client en réponse à une demande de téléchargement de l'application logicielle ; et
utiliser l'application d'amorçage :
lire (630) des informations locales stockées sur le dispositif client ; et
envoyer (650) une demande pour une application logicielle spécifique sur le réseau de communication, la demande étant basée sur les informations locales et l'application logicielle spécifique présentant un sous-ensemble de caractéristiques de l'application logicielle.

8. Procédé selon la revendication 7, dans lequel la demande comprend les informations locales.

9. Procédé selon la revendication 8, dans lequel les informations locales comprennent des justificatifs d'identification d'utilisateur.

10. Procédé selon les revendications 7, 8 ou 9, dans lequel l'application logicielle comprend une pluralité de parties, chaque partie ayant une fonctionnalité spécifique, et dans lequel l'application spécifique fournit la fonctionnalité de l'une des parties, le procédé comprenant les étapes suivantes :
recevoir une demande pour une autre application spécifique, l'autre application spécifique fournissant la fonctionnalité d'une autre partie ;
envoyer (680) une demande pour l'autre application spécifique au dispositif client en réponse à la demande.

11. Procédé tel que revendiqué dans l'une quelconque des revendications précédentes, dans lequel l'application logicielle est une application Web.

12. Procédé selon l'une quelconque des revendications précédentes, dans lequel la pluralité de caractéristiques comprend un ou plusieurs des éléments suivants : des adaptations spécifiques d'un dispositif ; une langue d'une interface utilisateur fournie par l'application logicielle ; une fonctionnalité spécifique à un fournisseur de services d'un service fourni en utilisant l'application logicielle ; une fonctionnalité de paiement ; une fonctionnalité de visualisation de contenu ; une fonctionnalité de catalogue de contenu ; un lecteur multimédia ; une fonctionnalité de média social ; une fonctionnalité de commentaires de contenu ; et une fonctionnalité de gestion de compte.

13. Procédé selon l'une quelconque des revendications précédentes, dans lequel l'application logicielle est une application de consommation multimédia (700) comprenant une fonctionnalité de transmission vidéo en continu.

14. Un ou plusieurs supports lisibles par ordinateur stockant des instructions codées qui, lorsqu'elles sont exécutées sur un processeur, mettent en œuvre un procédé selon l'une quelconque des revendications précédentes.

15. Système informatique comprenant un ou plusieurs supports lisibles par ordinateur selon la revendication 14 et un processeur configuré pour exécuter les instructions codées.
